Europäisches Patentamt

European Patent Office

Office européen des brevets

(19)

(11) **EP 1 089 404 A1**

(12) **EUROPEAN PATENT APPLICATION**

(43) Date of publication:
04.04.2001 Bulletin 2001/14

(51) Int Cl.$^7$: **H01S 3/08**

(21) Application number: **99830609.6**

(22) Date of filing: **28.09.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ENEL S.p.A.**
**I-00198 Roma (IT)**

(72) Inventor: **Brioschi, Franco Enrico**
**20050 Correzzana (Mi) (IT)**

(74) Representative: **Mittler, Enrico**
**c/o Mittler & C. s.r.l.,**
**Viale Lombardia, 20**
**20131 Milano (IT)**

(54) **Resonator for solid-state laser source**

(57)     It is described a resonator comprising a solid-state active material circular section rod (1) acting like a thermal lens (2) having prefixed principal planes (P1, P2). The thermal lens (2) is interposed between a first mirror (3) and a second mirror (4) which are placed on a optical axis passing on their focus and the focus of the thermal lens (2). The first (3) and second (4) mirrors are placed at a prefixed distance (L1, L2)) from the principals planes (P1, P2) of the rod (1). The first mirror (3) is a partial reflection flat mirror and the second mirror (4) is a high reflectivity convex mirror having a radius of curvature (R2) such as to allow that a laser beam passing trough said rod (1) results collimated on the flat mirror (3) and has the same diameter (3) as the mode on the rod (1).

Fig. 1

EP 1 089 404 A1

## Description

The present invention relates to a resonator for a solid-state laser source operating on a single transverse mode ($TEM_{00}$).

Currently solid-state laser sources are known which employ, as active medium, a solid-state material rod.

In these laser sources the resonator geometry is very important because it is responsible for the output beam characteristics and the efficiency of the laser. Particularly, both low divergence of the produced laser beam and high energy are required. This can be achieved if the laser oscillates on a single fundamental transverse mode ($TEM_{00}$). Usually oscillation on $TEM_{00}$ is forced by placing a pin-hole aperture in the resonator which acts like a spatial filter, which rejects the higher order modes (which have a larger diameter), but passes the lowest order mode having a small cross-section with respect to the active material. The active material is constituted by a circular-section rod and pump system associated thereto. Such rod, because the heat due to the dissipation of a part of the pump power, acts like a thermal lens which exhibits a focal length depending on the pump power, and this strongly affects the resonator properties, as described in W. Koechner - Solid-State Laser Engineering 3rd ed., Springer-Verlay, cap. 6. In fact the laser radiation oscillating back and forth in the resonator is periodically focused by the thermal lens of the rod so that the mode diameter depends on both the resonator mirror curvatures and the pump power level. Also it is useful that the resonator length is as short as possible.

In view of the state of the art described, it is an object of the present invention to perform a resonator for a solid-state laser source which solves the aforesaid problems.

According to the present invention, such object is attained by a resonator comprising a solid-state active material circular section rod acting like a thermal lens having prefixed principal planes, said thermal lens being interposed between a first mirror and a second mirror which are placed on a optical axis passing on their focuses and the focuses of the thermal lens, characterized in that said first and second mirrors are placed at a prefixed distance from said principals planes of the rod, and said first mirror being a partial reflection flat mirror and said second mirror being a high reflectivity convex mirror having a radius of curvature such as to allow that a laser beam passing trough said rod results collimated on the flat mirror and has the same diameter as the mode on the rod.

Thanks to the present invention it is possible to form a resonator for a solid-state laser source, which, without using a pin-hole but by choosing a suitable rod diameter, prevents the higher order transverse mode oscillation.

The features and the advantages of the present invention will be made evident by the following detailed description of an embodiment thereof, illustrated as not limiting example in the annexed drawings, wherein:

    Figure 1 is a schematic view of a resonator according to invention;
    Figure 2 is a schematic view of a laser source employing the resonator of figure 1.

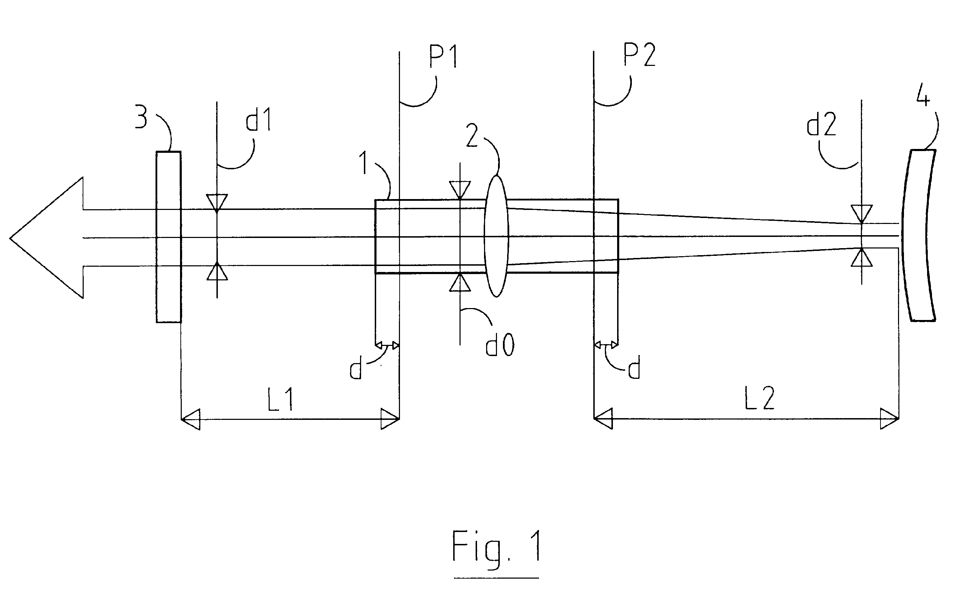

In figure 1 a solid-state material rod, particularly a Nd:YAG rod, acting like a thermal lens, designated symbolically by 2, is interposed between two mirrors 3 and 4, which are respectively a partial reflection flat mirror 3 and a high reflectivity convex mirror 4. L1 and L2 designate the distances of the cavity mirrors from the principal rod planes P1 and P2. These are located inside the rod at a distance d from the end faces of the rod, with d given by:

$$d = l/(2n)$$

    where l is the rod length and n the refraction index of the active medium. R2 designates the radius of curvature of the mirror 4 and d0, dl and d2 are the diameters of the mode respectively in the rod l and on the mirrors 3 and 4.

The resonator geometry can be defined for example by the following values:

-    the focal length of the thermal lens may assume any value in the range from 450 to 850 mm (range of tolerated changes in the focal length);
-    the distance L1 may assume any value in the range from 100 to 500 mm (selectable and depending on the space required for inserting the optical components);
-    the distance L2 is equal to 450 mm with possible change of ± 10 mm;
-    the radius of curvature R2 of the convex mirror is equal to 400 mm ± 10 mm;
-    the mirror 3 is flat;
-    the rod diameter is equal to 3 mm.

With such values the mode diameter inside the rod ranges from 1.6 to 3 mm for a thermal focal lens in the range between 450 and 850 mm. The output mirror is 3 and the output beam is collimated and exhibits the same diameter as in the rod.

The aforesaid choices are such that they assure a substantial beam stability when the thermal lens (that is the pump power) changes. In fact any change in the focal length within the designated values, which is due to changes or fluctuations in the pump power, can be tolerated and the pump power can be adjusted by adapting it to the different use requirements of the laser source, without any degradation of the beam characteristics.

Almost all the energy stored in the active material of the rod 1 by the pump process can be extracted by stimulated emission during the laser oscillation. The dependence of the mode diameter on the pump power is minimized because the geometry makes the resonator only slightly dependent on the thermal lens of the rod 1.

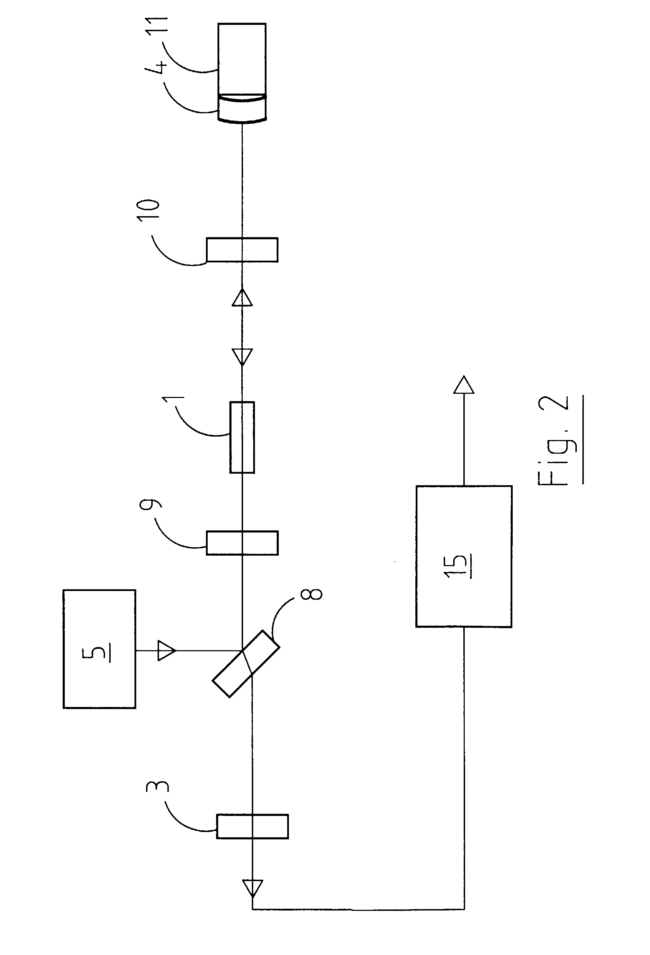

In figure 2 there is shown an exemplifying scheme of a possible laser source employing the above described resonator, which is formed by aforesaid components 1, 3 and 4.

A block 5 comprising a injection seeding laser, which is a CW, single-mode (usually the mode $TEM_{00}$), low power laser, irradiates a light beam which is made collimate and is injected into the resonator by a polariser 8.

The resonator, which has the mirror 4 mounted on a piezo actuator 11 having a control unit allowing to regulate the resonator length, is completed by a Q-switch system comprising a Pockels cell 9 and a quarter-wave plate 10.

The laser beam generated by the active medium contained in resonator is transmitted to a block 15 comprising a second harmonic generation system. Here, for example, a radiation at 1064 nm is partially converted to a second harmonic radiation at 532 nm. Then the beam is made collimate and, after separating the fundamental and second harmonic radiations, the 532 nm radiation beam is directed to the output port.

## Claims

1.  Resonator comprising a solid-state active material circular section rod (1) acting like a thermal lens (2) having prefixed principal planes (P1, P2), said thermal lens (2) being interposed between a first mirror (3) and a second mirror (4) which are placed on a optical axis passing on their focuses and the focuses of the thermal lens (2), characterized in that said first (3) and second (4) mirrors are placed at a prefixed distance (L1, L2)) from said principals planes (P1, P2) of the rod (1), and said first mirror (3) being a partial reflection flat mirror and said second mirror (4) being a high reflectivity convex mirror having a radius of curvature (R2) such as to allow that a laser beam passing trough said rod (1) results collimated on the flat mirror (3) and has the same diameter (3) as the mode on the rod (1).

2.  Resonator according to claim 1, characterized in that said principal planes (P1, P2) of the rod (1) are placed at a distance (d) from the end faces of the rod (1), which is given by the rod length (l) divided two times the refraction index (n) of the said material active of the rod (1).

3.  Resonator according to claim 1, characterized in that the diameter of said rod (1) is substantially equal to 3 mm.

4.  Resonator according to claim 1, characterized in that said radius of curvature (R2) of said convex mirror (4) is substantially equal to 400 mm.

5.  Resonator according to claim 1, characterized in that said focal length of said thermal lens (2) ranges substantially from 450 to 850 mm.

6.  Resonator according to claim 2, characterized in that said prefixed distance (L1) of said flat mirror (3) from the closest principal plane (P1) of said rod (1) ranges substantially from 100 mm to 500 mm.

7.  Resonator according to claim 2, characterized in that said distance (L2) of said convex mirror (4) from the closest principal plane (P2) of said rod (1) is substantially equal to 450 mm.

Fig. 1

Fig. 2

## EUROPEAN SEARCH REPORT

**European Patent Office**

**Application Number**

EP 99 83 0609

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1999, no. 02, 26 February 1999 (1999-02-26) & JP 10 303480 A (AMADA ENG CENTER:KK;AMADA CO LTD), 13 November 1998 (1998-11-13) * abstract * | 1 | H01S3/08 |
| A | US 5 255 275 A (MOTEGI TETSUYA) 19 October 1993 (1993-10-19) * figure 6 * | 1 | |
| A | US 5 170 406 A (TIDWELL STEVE C) 8 December 1992 (1992-12-08) * column 4, line 28 - line 59 * | 1 | |
| | | | **TECHNICAL FIELDS SEARCHED (Int.Cl.7)** |
| | | | H01S |

The present search report has been drawn up for all claims

| Place of search | Date of completion of the search | Examiner |
|---|---|---|
| THE HAGUE | 1 March 2000 | Galanti, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 83 0609

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2000

| Patent document cited in search report | | Publication date | Patent family member(s) | | Publication date |
|---|---|---|---|---|---|
| JP 10303480 | A | 13-11-1998 | NONE | | |
| US 5255275 | A | 19-10-1993 | JP | 5037049 A | 12-02-1993 |
| US 5170406 | A | 08-12-1992 | DE | 4208147 A | 17-09-1992 |
| | | | FR | 2679709 A | 29-01-1993 |
| | | | GB | 2254485 A,B | 07-10-1992 |
| | | | JP | 5226739 A | 03-09-1993 |

EPO FORM P0459

For more details about this annex : see Official Journal of the European Patent Office, No. 12/82